# EUROPÄISCHE PATENTSCHRIFT

(11) **EP 0 870 880 B1**
(45) Veröffentlichungstag und Bekanntmachung des Hinweises auf die Patenterteilung: **09.07.2003**
(21) Anmeldenummer: 98101678.5
(22) Anmeldetag: 31.01.1998
(51) Int. Cl.: E04B 2/78, E04B 2/74

(54) **Tragkonstruktion für Innenwände**
Support structure for partition walls
Structure porteuse pour cloisons

(30) Priorität: 09.04.1997 DE 29706302 U
(43) Veröffentlichungstag der Anmeldung: 14.10.1998
(73) Patentinhaber: CEKA-BÜROMÖBEL WERKE C. KRAUSE UND SOHN GmbH & Co. KG, D-36304 Alsfeld (DE)
(72) Erfinder: Becker, Norbert, 59597 Erwitte 2 (DE); Hildebrandt, Norbert, 59597 Erwitte 1 (DE)
(74) Vertreter: KEIL & SCHAAFHAUSEN

(56) Entgegenhaltungen:
- EP-A- 0 364 768
- DE-A- 3 726 255
- DE-A- 3 825 566
- FR-A- 2 376 927
- FR-A- 2 746 125
- NL-A- 8 801 950
- US-A- 4 441 300

## Beschreibung

Die Erfindung bezieht sich auf eine Tragkonstruktion für Innenwände, insbesondere solche für die raumbegrenzende Unterteilung von Nutzräumen, wie Büroräumen, nach dem Oberbegriff des Anspruchs 1.

Derartige Innenwände sind dazu bestimmt, Baukonstruktionen in kleinere, jederzeit bedarfsgerecht anpaßbare Nutzungseinheiten zu unterteilen. Dabei werden werksseitig vorgefertigte Bauteile zu einer oberflächenfertigen Innenwand zusammengefügt. Die Innenwände sollen sich leicht umsetzen und funktionell verändern lassen, wobei bereits vorhandene Bauteile erneut verwendet oder mit zusätzlichen Bauteilen zu weiteren Konfigurationen umgerüstet werden können. Bekannte umsetzbare Innenwände haben z.B. eine Metall-Unterkon-struktion mit vertikal und horizontal verlaufenden Trag- und Anschlußprofilen, an welcher ein- oder beidseitig, jeweils durch eine Stoßfuge voneinander getrennte, oberflächenfertige Wandschale, Verglasungsrahmen, Türzargen oder dergleichen mittels Montageelementen lösbar befestigt sind. Das mittig zu einer Stoßfuge angeordnete Tragprofil kann zusätzliche Befesitgungsmöglichkeiten zum Anbringen von Fachböden, Regalen, Schrankelementen, Tafeln, Tischplatten und dergleichen aufweisen. Zur Gewährleistung eines ausreichenden Schall- und Brandschutzes ist der Hohlraum hinter den Wandschalen oder dergleichen meist noch mit Mineralwolle ausgefüllt. Außerdem werden an den Trag- und Anschlußprofilen zusätzlich Abdichtungsmaßnahmen getroffen, wenn erhöhte bauphysikalische Beanspruchungen zu erwarten sind.

Aus der DE-A-3 726 255 ist beispielsweise eine als Trennwand bezeichnete umsetzbare Innenwand bekannt, bei welcher das als Profilständer bezeichnete vertikale Tragprofil als einstückiges Walzprofil aus Stahlblech ausgebildet ist, das im wesentlichen die Gestalt eines Doppel-T-Profils aufweist, dessen Halteschenkel durch eine jeweils zwischen ihnen angeordnete Hohlkammerbegrenzungswand paarweise einstückig miteinander verbunden sind. Von den Halteschenkeln sind weitere Hohlraumbegrenzungswände abgebogen. Zwei der zu einander gegenüberliegenden Halteschenkeln gehörenden Begrenzungswände sind dabei, unter Bildung des Verbindungsstegs, einstückig miteinander verbunden, während die zu den beiden anderen Halteschenkeln gehörenden Begrenzungswände eine freie, gegen die benachbarte (beispielsweise den Verbindungssteg bildende) Begrenzungswand anliegende Randleiste aufweisen. Bei einer ersten Ausführungsform dieser umsetzbaren Innenwand erstreckt sich die Hohlkammer über einen Teil der Gesamtbreite der miteinander verbundenen Halteschenkel, während sich die Hohlkammer bei einer anderen Ausführungsform über die gesamte Breite der verbundenen Halteschenkel erstreckt, so daß die nach innen gebogenen Blechstreifen die rückwärtige Begrenzungswand der Hohlkammer bilden. Bei dieser umsetzbaren Innenwand sind in den Verbindungssteg des Tragprofils zusätzlich Durchgangslöcher für Montagezwecke in bekannter Weise eingestanzt. Bei dem Profilständer nach der DE-A-3 726 255 soll gegenüber den aus der DE-A-3 225 060 und der US-A-2 633 945 bekannten Profilständem die Schall- und Branddämmung verbessert werden, was jedoch, wie sich in der Praxis gezeigt hat, nicht der Fall ist. Sowohl nach der DE-A-3 225 060 als auch nach der US-A-2 633 945 wird vorgeschlagen, die Verbindungsstege der aus drei bzw. zwei Einzelstäben zusammengesetzten Tragprofile durch Verstanzen oder durch Punktschweißen miteinander fest und dicht anliegend zu verbinden. Nach der in der DE-A-3 726 255 gezeigten Tragprofilausbildung ist keine derartige Verbindung zwischen dem Verbindungssteg und den an diesem frei anliegenden Randleisten vorgesehen. Dies hat zur Folge, daß der über die Stoßfugen zwischen Wandschalen und dergleichen durch Rasteröffnungen in den die Halteschenkel des Tragprofils verbindenden Hohlkammerbegrenzungswände eintretende Luftschall durch die in der gesamten Profillänge verlaufenden Spalten zwischen dem Verbindungssteg und den an diesem frei anliegenden Randleisten praktisch ungehindert hindurchgeleitet wird. Es ist darüber hinaus durch entsprechende Brandversuche bekannt, daß sich die Tragprofile bei einer einseitigen Brandbeanspruchung zum Feuer hin durchbiegen, wobei durch ungleichmäßige Erwärmung hervorgerufene Profilverformungen auf der dem Feuer gegenüberliegenden Randseite die mögliche Spaltbildung zwischen dem Verbindungssteg und der freien Randleiste derart ungünstig beeinflussen, daß ein Durchtritt des Feuers nicht ausgeschlossen werden kann. Ein Vergleich mit den Lösungen nach der US-A-2 633 945 und DE-A-3 225 060 zeigt, daß die Profilkonstruktion nach der DE-A-3 726 255 tatsächlich schlechter ist. Auch die nach der DE-A-3 821 500 zusätzlich vorgeschlagene Maßnahme, die Randleisten mit dem Verbindungssteg durch formgleich ineinandergreifende Formstanzungen miteinander zu verbinden, ergibt sich eine nur unzureichende Verbesserung bei Schall- und Brandbeanspruchungen wegen der freien Zugänglichkeit der Profilfuge zwischen den Profilabschnitten im Stoßbereich der Wandelemente. Darüber hinaus haftet der aus der DE-A-3 726 255 bekannten Profilkonstruktion, bei welcher in die Halteschenkel sowohl Einhängeöffnungen für Wandschalen und dergleichen als auch Rasteröffnungen im Bereich der Stoßfuge zwischen diesen zum Anbringen von Fachböden und dergleichen vorgesehen sind, der Nachteil an, daß die Zuordnungs- und Montagemöglichkeiten begrenzt sind, so daß diese den heutigen Forderungen nach einer individuellen Wandschalen- und Glasflächengestaltung nicht mehr entsprechen.

Die bei bekannten umsetzbaren Innenwänden bisher vorgesehenen Verglasungen sind in der Regel wenig montagefreundlich, bzw. ist der Glasein- und -ausbau nur bei einer unvollständig montierten Wand möglich. Ähnliche Probleme ergeben sich beim Ein-, Aus- und Umbauen von Türzargen und Türelementen. Auch hier erfolgt die Montage meist mit dem Wandaufbau, so daß spätere Änderungen in der Regel eine Teildemontage der fertigen Innenwand erfordern.

Aus der EP-A-0 364 768 ist eine Tragkonstruktion entsprechend dem Oberbegriff des Anspruchs 1 bekannt. Hierbei ist der Profilsteg als einfacher Flachmaterialquersteg ausgebildet, was nur zu einer geringen Stabilität der Tragkonstruktion führt. Insbesondere sind jedoch in dem Nutgrund der Befestigungsnut Eingriffsöffnungen vorgesehen, in welche Einhängehaken z.B. für Bücherstützen eingreifen sollen. Auf diese Weise wird nur geringer Schall- und Brandschutz erreicht.

Der Erfindung liegt die Aufgabe zugrunde, eine Tragkonstruktion hinsichtlich der Schall- und Branddämmung zu verbessern.

Diese Aufgabe wird erfindungsgemäß bei einer Tragkonstruktion der im Oberbegriff des Anspruchs 1 genannten Art mit den Merkmalen des kennzeichnenden Teils des Anspruchs 1 gelöst.

Dadurch, dass der Profilsteg von einer Stegwandung mit zwei eindseitig der Stegwandung anliegenden Randleisten bzw. zwei aneinander liegenden Stegwandungen gebildet ist und dass in dem Nutgrund der Befestigungsnut wenigstens ein Wandungsabschnitt die Stoßfuge zwischen der Stegwandung und den Randleisten bzw. den beiden Stegwandungen, welche den Profilsteg bilden, überdeckt, ergibt sich unter anderem eine wesentliche Verbesserung des Schall- und Brandschutzes. Mit Hilfe dieser Wandungsabschnitte wird gegenüber dem Stand der Technik ein flächenschließender Effekt erreicht, weil ein einfaches Walzprofil ohne jegliche Öffnungen zum Einhängen von Wandschalen, Anbringen von Regalen oder dergleichen als Tragprofil verwendet wird.

in weiterer Ausgestaltung der Erfindung kann die Befestigungsnut als C-Nut mit den Nuteintrittsschlitz begrenzenden Arretierungsstegen ausgebildet sein, so daß Adapterstücke der Befestigungselemente für die Anbringung von Fachböden und dergleichen im Stoßfugenbereich einfach möglich ist.

Zu diesem Zweck können die Adapterstücke in den Befestigungsnuten, beispielsweise mittels Klemmschrauben, festlegbar sein.

Für eine Stabilisierung des Tragprofils, insbesondere im Bereich der Kräfte aufnehmenden Befestigungsnut, ist es von Vorteil, wenn die Halteschenkel als die Befestigungsnut beidseits begrenzende Kastenprofile ausgebildet sind, deren äußere Wandungen die Einhängeöffnungen für die Montageelemente aufweisen. Die Montageelemente der Wandschalen und dergleichen sind dabei den anzuhängenden Wandschalen und dergleichen so zugeordnet, daß nach der Montage die Einhängeöffnungen von den Wandschalen und dergleichen, aus Brand- und Schallschutzgründen abgedeckt sind.

Von besonderem Vorteil ist es, wenn gemäß einer noch weiteren Ausgestaltung der Erfindung die Seitenwandungen der Halteschenkel mit im wesentlichen U-förmigen Eingriffsnuten für die kraft- und/oder formschlüssige Aufnahme von Befestigungsstegen einer Glashalteleiste ausgebildet sind. Die so an den Seitenflächen der Halteschenkel des Tragprofils ausgeformten U-förmigen Nutausbildungen ermöglichen die schraubenlose Befestigung von Glashalteleisten, wodurch die Verglasung derartiger Wände wesentlich vereinfacht ist.

Dabei können die Befestigungsstege der Glashalteleisten und dadurch die Glashaltelelsten selbst mittels In dem Nutauslauf der Eingriffsnuten ausgebildeter Arretierungskanten gesichert sein.

Einen festen Sitz erhalten die in die Einhängeöffnungen eingreifenden Montageelemente der Wandschalen und dergleichen, wenn erstere zu ihren beiden oberen und unteren Schmalseiten hin verjüngt sind.

Es ist aber auch möglich, daß die Einhängeöffnungen für die Montageelemente der Wandschalen und dergleichen als sich über die Länge des Tragprofils erstreckende Haltenuten ausgebildet sind.

Die Haltenuten können dabei vorzugsweise als zum Beispiel asymetrische C-Nuten mit wenigstens einem Arretierungssteg am Nutenauslauf ausgebildet sein, um eine zusätzliche Sicherung für die Montageelemente zu bilden. Für diesen Fall können die Montageelemente der Wandschalen und dergleichen beispielsweise mittels Federabschnitten lösbar in die Haltenuten einrastbar sein.

Zur Stabilisierung des Tragprofilaufbaus kann es von Vorteil sein, wenn die Stegwandung mit den Randleisten bzw. mit der weiteren Stegwandung durch Stechen mit vorzugsweise beidseitiger Verlappung nicht-lösbar verbunden sind.

Für die Horizontalverbindung der Tragprofile weist deren Profilsteg vorzugsweise ein im modularen Bezug zu den Einhängeöffnungen stehendes Lochbild aus langschlitzförmig ineinadergreifenden Rundlochungen auf, zwischen welchen vorzugsweise Rechtecköffnungen über die Länge des Tragprofils verteilt angeordnet sind. Durch diese Steglochung ist eine sehr feinstufige Maßanpassung an alle heutigen Forderungen nach individueller Wand- und Glasflächenaufteilung entsprochen.

Erfindungsgemäß kann ferner eine Federklammer vorgesehen sein, welche in eine Einhängeöffnung einhängbar und auf eine Glashalteleiste aufklipsbar ist und welche Mittel zum Einrasten eines Glasrahmens aufweist. Hierdurch ist eine einfache Montagemöglickeit für im Bedarfsfall vorzusehende Glasrahmen geschaffen.

In den Ansprüchen 15 und 16 sind besondere Adapterstücke für die erfundene Tragkonstruktion gekennzeichnet.

In der nachfolgenden Beschreibung werden anhand der Zeichnung Ausführungsbeispiele der Erfindung näher erläutert.

Es zeigen:
- Fig. 1: einen Horizontalschnitt einer Tragkonstruktion für umsetzbare Innenwände nach einem Ausführungsbeispiel der Erfindung,
- Fig. 2: einen Horizontalschnitt entsprechend Fig. 1 für eine andere Ausführungsform der Erfindung,
- Fig. 3: ein erfindungsgemäßes Tragprofil in stirnseitiger Ansicht,
- Fig. 4: ein erfindungsgemäßes Tragprofil in Seitenansicht,
- Fig. 5: teilweise geschnitten ein erfindungsgemäßes Adapterstück von Befestigungselementen für Fachböden und dergleichen im Stoßfugenbereich der Innenwand,

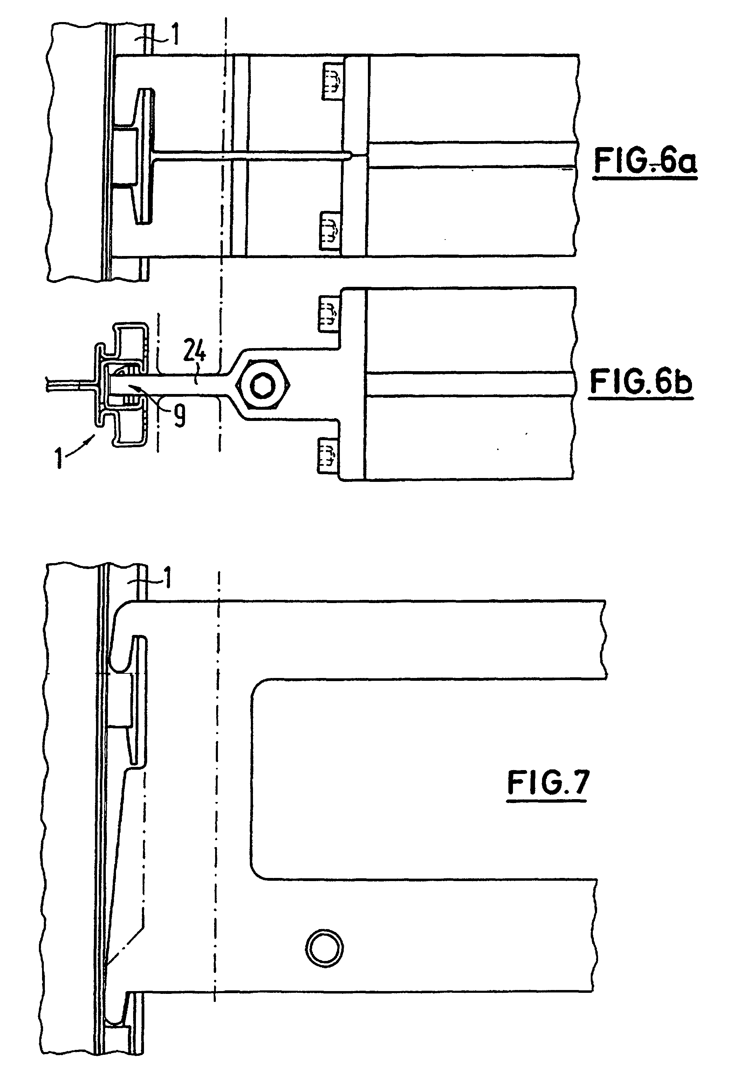

- Fig. 6a und 6b: in Seitenansicht und in Draufsicht eine Art der Anbringung von Befestigungselementen im Stoßfugenbereich der Innenwand mittels Adapterstück,
- Fig. 7: die Möglichkeit einer Anhängung von Konsolen und dergleichen in den Einhängeöffnungen der Halteschenkel eines erfindungsgemäßen Tragprofils,
- Fig. 8: im Horizontalschnitt eine weitere Ausgestaltung einer erfindungsgemäßen Tragkonstruktion,
- Fig. 9: eine Glashalterleiste zur Verwendung mit einem erfindungsgemäßen Tragprofil,
- Fig. 10: im Horizontalschnitt eine noch weitere Ausgestaltung einer erfindungsgemäßen Tragkonstruktion, und
- Fig. 11: eine Federklammer zur Verwendung bei erfindungsgemäßen Tragprofilen für die Befestigung von Glasrahmen.

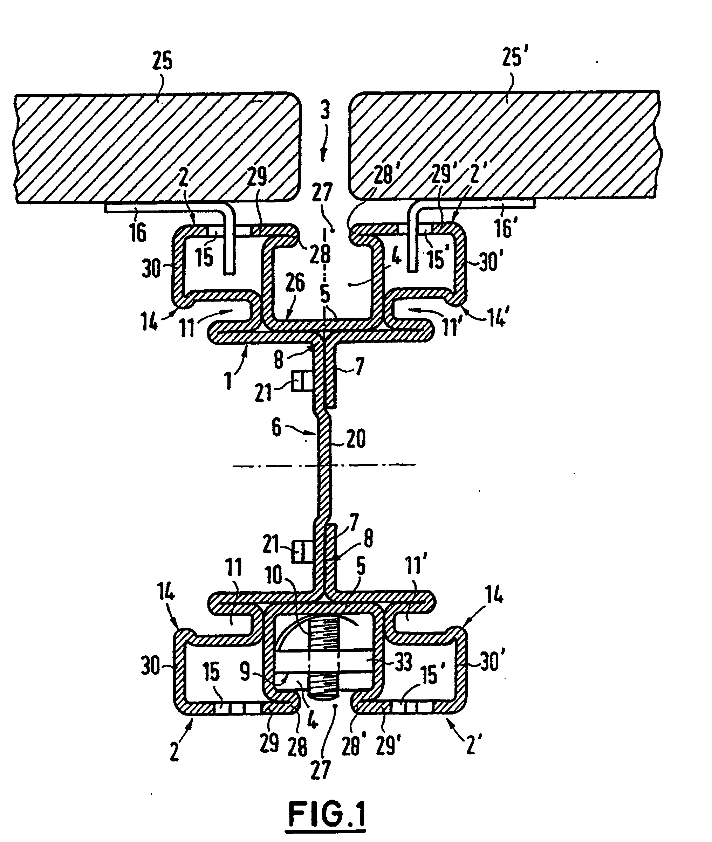

Die in Fig. 1 dargestellte Tragkonstruktion weist als einteiliges Walzprofil ausgebildete Tragprofile 1 aus Stahlblech auf. An den Tragprofilen 1 sind beidseitig jeweils durch eine Stoßfuge 3 voneinander getrennte (nur einseitig dargestellte) Wandschalen 25, 25' mittels Montageelementen 16, 16' lösbar befestigbar. Zu diesem Zweck weist das Tragprofil 1 an den beiden Enden eines von einer Stegwandung 20 und zwei endseitig anliegenden Randleisten 7 gebildeten Profilstegs 6 je nach beiden Seiten von diesem abgebogene Halteschenkel 2, 2' mit nach außen weisenden Öffnungen 15, 15' für das Einhängen der Montageelemente 16, 16' auf. An einem im Bereich einer Stoßfuge 3 angeordneten Tragprofil 1 können zusätzlich Befestigungselemente 24 für Fachböden, Regale, Schrankelemente, Tafeln, Tischplatten und dergleichen mittels Adapterstück 9 angebracht werden. Zu diesem Zweck sind auf beiden Seiten des Tragprofils 1 zwischen den jeweiligen Halteschenkeln 2, 2' zu der Stoßfuge 3 der Wandschalen 25, 25' oder dergleichen ausgerichtete, sich über die Länge des Tragprofils 1 erstreckende Befestigungsnuten 4 für die Aufnahme der Adapterstücken 9 der Befestigungselemente 24 freigehalten. Das Tragprofil 1 ist im Nutgrund 26 der Befestigungsnut 4 so gestaltet, daß ein durchgehender Wandungsabschnitt 5 den Profilstoß 8 zwischen der Stegwandung 20 und den Randleisten 7 außen überdeckt.

Die Befestigungsnut 4 ist als C-Nut mit den Nuteintrittsschlitz 27 begrenzenden Arretierungsstegen 28, 28' ausgebildet. Die Adapterstücke 9 sind in der Befestigungsnut 4 mittels Klemmschrauben 10 festlegbar.

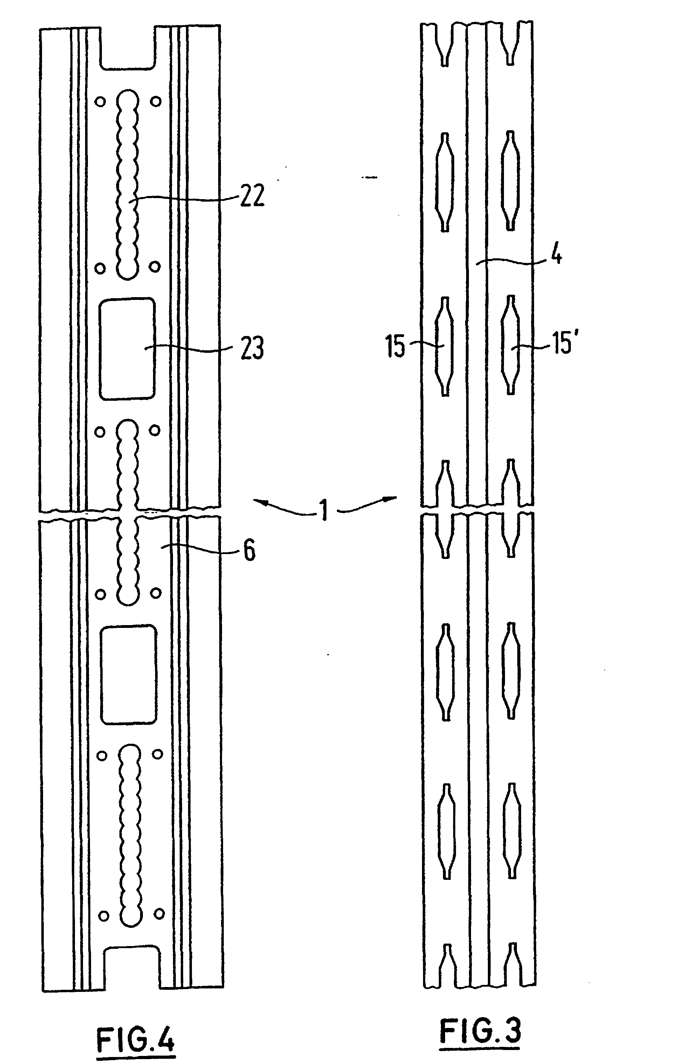

Die Halteschenkel 2, 2' sind als die Befestigungsnut 4 beidseits begrenzende Kastenprofile ausgebildet, deren äußere Wandungen 29, 29' die Einhängeöffnungen 15, 15' für die Montageelemente 16, 16' aufweisen. Die Montageelemente 16, 16' sind als Winkelelemente ausgebildet, deren einer Schenkel in die Einhängeöffnungen 15, 15' eingreifen. Die Eingriffsöffnungen 15, 15' für die Montageelemente 16, 16' sind, wie aus Fig. 3 ersichtlich, zu ihren beiden Schmalseiten hin verjüngt.

Die Seitenwandungen 30, 30' der Halteschenkel 2, 2' sind mit im wesentlichen U-förmige Eingriffsnuten 11, 11' für die kraft- und/oder formschlüssige Aufnahme von Befestigungsstegen 12 einer Glashalteleiste 13, 13' ausgebildet, wie sie in Fig. 9 näher veranschaulicht ist. Die Befestigungsstege 12 und dadurch die Glashalteleisten 13, 13' sind mittels in dem Nutauslauf der Eingriffsnuten 11, 11' ausgebildeter Arretierungskanten 14, 14' gesichert.

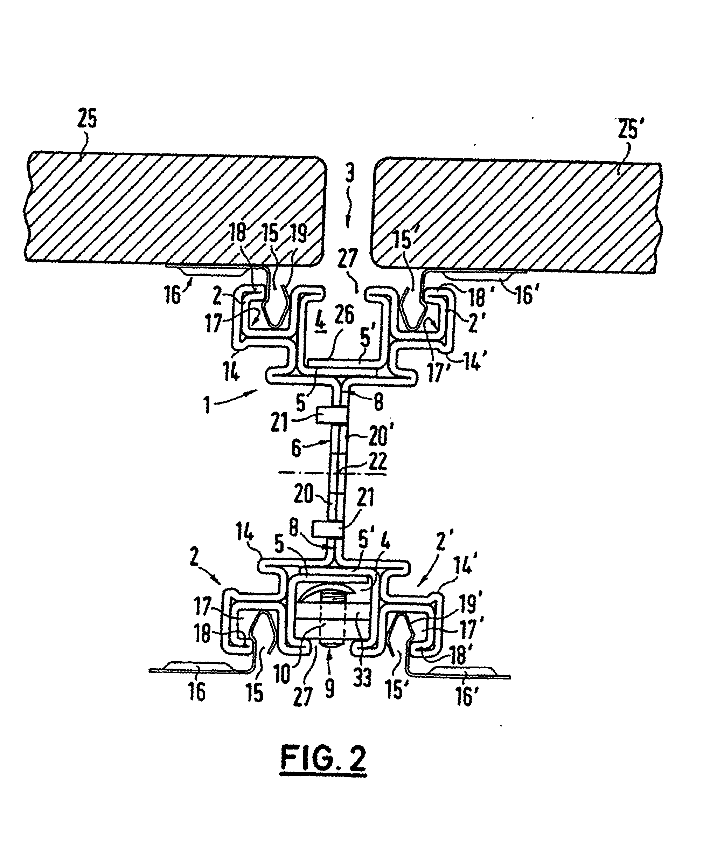

Wie anhand des Ausführungsbeispieles von Fig. 2 gezeigt, können die einzelnen Einhängeöffnungen 15, 15' für die Montageelemenete 16, 16' auch als sich über die Länge des Tragprofils 1 erstreckende Haltenuten 17, 17' ausgebildet sein. Die Haltenuten 17, 17' haben in dem in Fig. 2 veranschaulichten Ausführungsbeispiel die Form asymetrischer C-Nuten mit einem Arretierungssteg 18, 18' am Nutauslauf. Bei der Ausführungsform gemäß Fig. 2 haben die Montageelemente 16, 16' Federabschnitte 19, 19', mit Hilfe welcher sie lösbar in die Haltenuten 17, 17' einrastbar sind.

Abweichend von Fig. 1 ist das Tragprofil 1 gemäß Fig. 2 zweiteilig ausgebildet, und zwar in der Weise, daß sich im Nutgrund 26 der Befestigungsnuten 4 die beiden Wandungsabschnitte 5, 5' als Endabschnitte der beiden Profilteile überlappen und dadurch den Profilstoß 8 zwischen den in diesem Fall den Profilsteg 6 bildenden beiden Stegwandungen 20, 20' doppelt abdecken. Ebenso wie bei der Ausführungsform gemäß Fig. 1 die Randleisten 7 zur Stabilisierung mit der einen Stegwandung 20 durch Verlappung 21 nicht-lösbar verbunden sind, sind bei der Ausführungsform gemäß Fig. 2 die beiden Stegwandungen 20, 20' auf diese Weise aneinander gesichert.

Wie sich aus Fig. 4 ergibt, hat der Profilsteg 6 ein in modularem Bezug zu den Einhängeöffnungen 15, 15' stehendes Lochbild aus langschlitzförmig ineinandergreifenden Rundlochungen 22 die zur Anbringung eines Verbindungsteils (nicht gezeigt) vorgesehen sind, so daß sich beim Verbinden eines vertikalen mit einem horizontal verlaufenden Tragprofil eine feinstufige Höhenanpassung zwischen den in dem vertikalen Tragprofil eingestanzten Einhängeöffnungen 15, 15' und der Profilachse des horizontal daran anschließenden Tragprofils ergibt. Die zu einem Langschlitz zusammengefaßten Rundlochungen 22 wechseln sich mit zwischen diesen angeordneten Rechtecköffnungen 23 über die Länge des Tragprofils 1 verteilt ab.

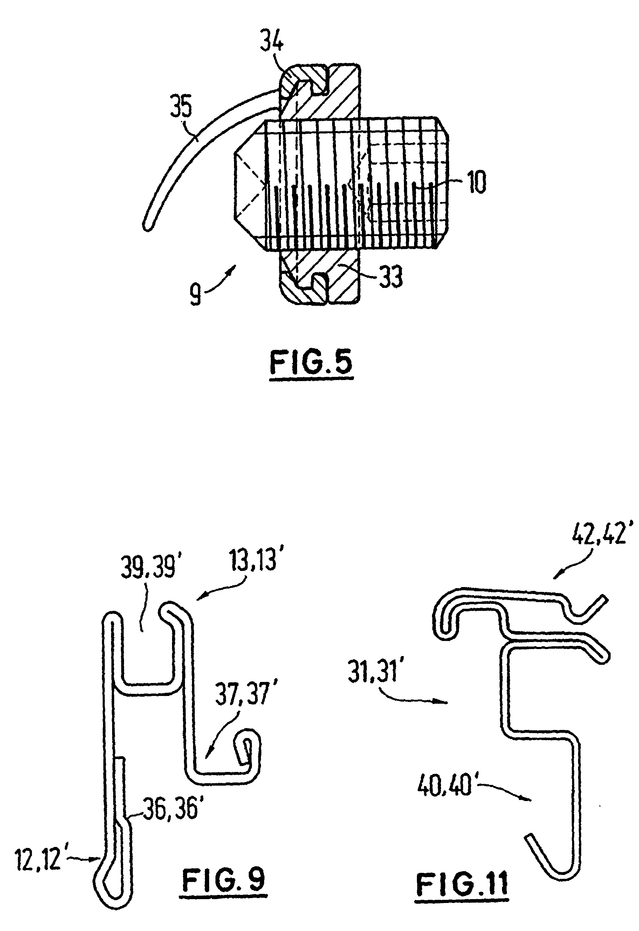

Die Adapterstücke 9 bestehen gemäß Fig. 5 aus einer Klemmschraube 10 mit zugehöriger Klemmutter 33 und einem darauf aufgesetzen Adapterklip 34 mit einem davon gebogen wegragenden elastisch nachgiebigen Federarm 35, welcher nach dem Einfügen in eine Befestigungsnut 4 gemäß Fig. 1 und 2 den Adapter 9 zunächst in Position hält. Wird dann die Klemmschraube 10 angezogen, so daß sie sich auf dem Nutgrund 26 abstützt, bewegt sich die Klemmutter 33 nach außen bis sie sich ihrerseits auf den Innenflächen der Arretierungsstege 28, 28' abstützt, so daß das Adapterstück 9 auf diese Weise einfach in der Befestigungnsut 4 festgelegt werden kann.

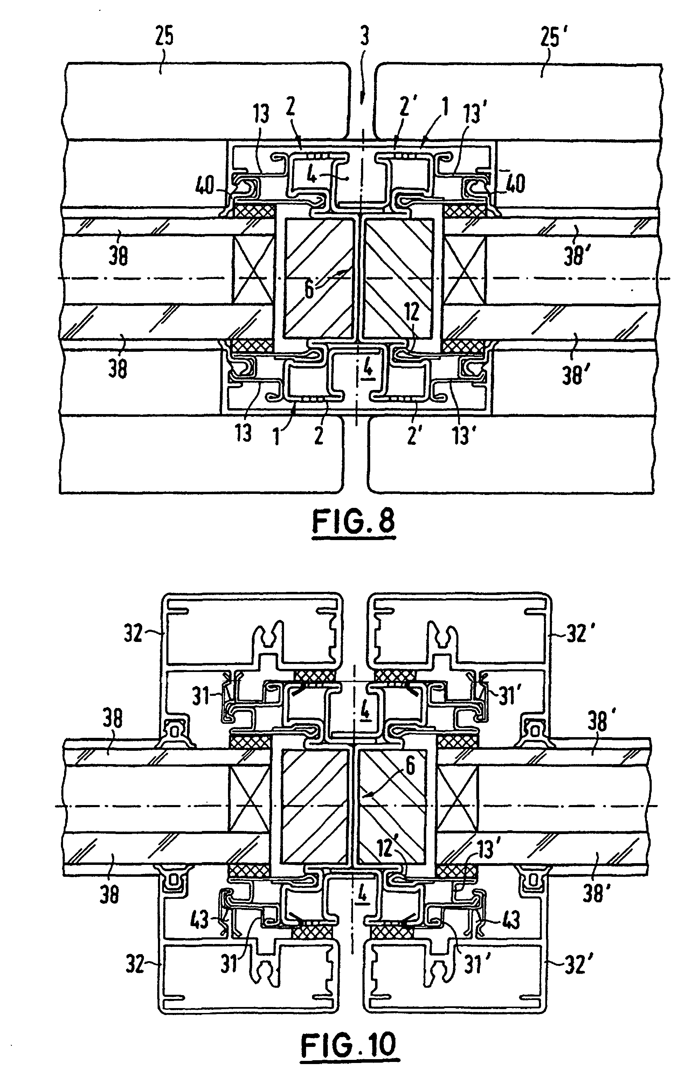

Bei der Ausgestaltung gemäß Fig. 8 sind die erfindungsgemäß vorgesehenen Glashalteleisten 13, 13', wie sie sich beispielsweise aus Fig. 9 ergeben, in die entsprechenden seitlichen Eignriffsnuten 11, 11' eingerastet und dort mittels der Arretierungskanten 14, 14' gesichert. Zu diesem Zweck ist der jeweilige Befestigungsabschnitt 12, 12' der Glashalteleisten 13, 13' mit einem federnd nachgiebigen Kopf ausgestattet, welcher so gestaltet ist, daß er zwar einfach in die Eingriffsnuten 11, 11' einführbar, aber nur mit größerem Kraftaufwand wieder aus diesen herausziehbar ist. Hierzu dient eine Arretierungskante 36, 36', welche mit den Arretierungskanten 14, 14' der Eingriffsnuten 11, 11' zusammenwirkt. Die Glashalteleisten 13, 13' sind ferner so ausgestaltet, daß sie sich über einen seitlichen Arm 37, 37' an der jeweiligen Seitenwandung 30, 30' des Tragprofils 1 flächig abstützen. Zwischen den freien Enden der Glashalteleisten 13, 13' sind, wie aus Fig. 8 ersichtlich, Glasscheiben 38, 38' unter Zwischenlage von Dichtprofilen und Abstandshaltern einspannbar. Zu Außennuten 39, 39' der Glashalteleisten 13, 13' können ferner Dichtprofile 40, 40' eingelassen sein.

Wie aus Fig. 10 ersichtlich, können die Glashalteleisten 13, 13' zusätzlich dem Aufrasten von Federklammern 31, 31' dienen, wie sie in Fig. 11 dargestellt sind. Diese Federklammem 31, 31' sind mit ihrem einen hakenförmigen Ende 41, 41' in die Einhängeöffnungen 15, 15' der Halteschenkel 2, 2' einhängbar und weisen an ihrem anderen Ende Rastlaschen 42, 42' für die Aufnahme von Arretierungsvorsprüngen 42, 43' auf der Innenseite von Glasrahmen 32, 32' auf. Die Glasrahmen 32, 32' können sich gemäß Fig. 10 einerseits an den äußeren Wandungen 29, 29' der Halteschenkel 2, 2' und andererseits über Dichtprofile auf der Außenseite der Glasscheiben 38, 38' abstützen.

Bei einer solchen Tragkonstruktion sind die Anbringungsmöglichkeiten für Befestigungsteile im Bereich der Stoßfuge zwischen den Wandschalen und dergleichen sowie für die Wandschalen und dergleichen selbst sind sowohl funktionell als auch ästhetisch verbessert. Die Befestigungs- und Montageöffnungen sind so gestaltet und angeordnet, daß eine individuelle Anpassung der umsetzbaren Innenwand an die heutigen Forderungen entsprechende Wand- und Glasflächengestaitung ohne Nachteile für eine weitgehende werkseitige Vorfertigung und unter Berücksichtigung eines ausreichenden Ausgleichs bauüblicher Maßtoleranzen gewährleistet ist. Hinsichtlich einer weiteren Reduzierung der Montagezeiten am Bau ergibt sich außerdem eine Verbesserung insbesondere beim Einbau von Verglasungen dahingehend, daß ein einfacher, werkzeugfreier Glasein- und -ausbau möglich ist, wobei Normalverglasungen jeweils in Brandschutzverglasungen umrüstbar sind.

### Bezugszeichenliste:

- 1: Tragprofil
- 2, 2': Halteschenkel
- 3: Stoßfuge
- 4: Befestigungsnut
- 5, 5': Wandungsabschnitte
- 6: Profilsteg
- 7: Randleisten
- 8: Profilstoß
- 9: Adapterstück
- 10: Klemmschraube
- 11, 11': Eingriffsnuten
- 12, 12': Befestigungsabschnitte
- 13, 13': Glashalteleisten
- 14, 14': Arretierungskanten
- 15, 15': Öffnungen
- 16, 16': Montageelemente
- 17, 17': Nuten
- 18, 18': Arretierungsstege
- 19, 19': Federabschnitte
- 20, 20': Stegwandungen
- 21: Verlappungen
- 22: Rundlochungen
- 23: Öffnungen
- 24: Befestigungselemente
- 25, 25': Wandschalen und dergleichen
- 26: Nutgrund
- 27: Nuteintrittsschlitz
- 28, 28': Arretierungsstege
- 29, 29': äußere Wandungen
- 30, 30': Seitenwandungen
- 31, 31': Federklammern
- 32, 32': Glasrahmen
- 33: Klemmutter
- 34: Adapterklip
- 35: Federarm
- 36, 36': Arretierungskanten
- 37, 37': Arme
- 38, 38': Glasscheiben
- 39, 39': Außennuten
- 40, 40': Dichtprofile
- 41, 41': hakenförmiges Ende
- 42, 42': Rastlaschen
- 43, 43': Arretierungsvorsprünge

## Patentansprüche

1. Tragkonstruktion für Innenwände, insbesondere solche für die raumbegrenzende Unterteilung von Nutzräumen, wie Büroräumen, mit vertikalen, als ein- oder zweiteiliges Walzprofil ausgebildeten Tragprofilen (1) aus Stahlblech, an welchen ein- oder beidseitig jeweils durch eine Stoßfuge (3) voneinander getrennte Wandschalen (25, 25'), Verglasungsrahmen oder Türzargen mittels Montageelementen (16, 16') lösbar befestigbar sind, indem das Tragprofil (1) an den beiden Enden eines von einer Stegwandung (20) gebildeten Profilsteges (6, 7; 20, 20') je nach beiden Seiten von diesem abgebogene Halteschenkel (2, 2') mit Öffnungen (15, 15') für das Einhängen der Montageelemente (16, 16') aufweist, wobei an einem der Im Bereich der jeweiligen Stoßfuge (3) der Wandschalen (25, 25'), Verglasungsrahmen oder Türzargen angeordneten Tragprofil (1) zusätzlich Befestigungselemente (24) für Fachböden, Regale, Schrankelemente, Tafeln oder Tischplatten anbringbar sind, indem auf belden Seiten des Tragprofils (1) zwischen den Halteschenkeln (2, 2') eine sich über die Länge des Trageprofils (1) erstreckende, zu der Stoßfuge (3) der Wandschalen (25, 25'), Verglasungsrahmen oder Türzargen ausgerichtete Befestigungsnut (4) für die Aufnahme von Adapterstücken (9) der Befestigungselemente (24) für die Fachböden, Regale, Schrankelemente, Tafeln oder Tischplatten freigehalten ist, **dadurch gekennzeichnet, dass** der Profilsteg (6, 7; 20, 20') von einer Stegwandung (20) mit zwei endseitig der Stegwandung (20) anliegenden Randleisten (7) bzw. zwei aneinander liegenden Stegwandungen (20, 20') gebildet ist und dass in dem Nutgrund (26) der jeweiligen Befestigungsnut (24) wenigstens ein Wandungsabschnitt (5, 5') den Profilstoß (8) zwischen der Stegwandung (20) und den Randleisten (7) bzw. den beiden Stegwandungen (20, 20'), welche den Profilsteg (6) bilden, überdeckt.

2. Tragkonstruktion nach Anspruch 1, **dadurch gekennzeichnet, daß** die Befestigungsnut (4) als C-Nut mit ein oder zwei den Nuteintrittsschlitz (27) begrenzenden Arretierungsstegen (28, 28') ausgebildet sind.

3. Tragkonstruktion nach Anspruch 1 oder 2, **dadurch gekennzeichnet, daß** die Halteschenkel (2, 2') als die Befestigungsnut (4) beidseits begrenzende Kastenprofile ausgebildet sind, deren äußere Wandungen (29, 29') die Einhängeöffnungen (15, 15') für die Montageelemente (16, 16') aufweisen.

4. Tragkonstruktion nach einem der vorhergehenden Ansprüche, **dadurch gekennzeichnet, daß** die Adapterstücke (9) in den Befestigungsnuten (4), beispielsweise mittels Klemmschrauben (10), festlegbar sind.

5. Tragkonstruktion nach einem der vorhergehenden Ansprüche, **dadurch gekennzeichnet, daß** die Seitenwandungen (30, 30') der Halteschenkel (2, 2') als im wesentlichen U-förmige Eingriffsnuten (11, 11') für die kraft- und/oder formschlüssige Aufnahme von Befestigungsstegen (12) einer Glashalterleiste (13) ausgebildet sind.

6. Tragkonstruktion nach einem der vorhergehenden Ansprüche, **dadurch gekennzeichnet, daß** die Befestigungsstege (12) und dadurch die Glashalterleisten (13) mittels in dem Nutauslauf der Eingriffsnuten (11, 11') ausgebildete Arretierungskanten (14, 14') gesichert sind.

7. Tragkonstruktion nach einem der vorhergehenden Ansprüche, **dadurch gekennzeichnet, daß** sich die Einhängeöffnungen (15, 15') für die Montageelemente (16, 16') der Wandschalen oder dergleichen zu ihren beiden Schmalseiten hin verjüngen.

8. Tragkonstruktion nach einem der vorhergehenden Ansprüche, **dadurch gekennzeichnet, daß** die Einhängeöffnungen (15, 15') für die Montageelemente (16, 16') der Wandschalen oder dergleichen als sich über die Länge des Tragelements (1) erstreckende Haltenuten (17, 17') ausgebildet sind.

9. Tragkonstruktion nach einem der vorhergehenden Ansprüche, **dadurch gekennzeichnet, daß** die Haltenuten (17, 17') als zum Beispiel asymetrische C-Nuten mit wenigstens einem Arretierungssteg (18, 18') am Nutauslauf ausgebildet sind.

10. Tragkonstruktion nach einem der vorhergehenden Ansprüche, **dadurch gekennzeichnet, daß** die Montageelemente (16, 16') mittels Federabschnitten (19, 19') lösbar in die Haltenuten (17, 17') einrastbar sind.

11. Tragkonstruktion nach einem der vorhergehenden Ansprüche, **dadurch gekennzeichnet, daß** die Stegwandung (20) mit den Randleisten (7) bzw. mit der weiteren Stegwandung (20') durch Stechen mit vorzugsweise beidseitiger Verlappung (21) nicht- lösbar verbunden sind.

12. Tragkonstruktion nach einem der vorhergehenden Ansprüche, **dadurch gekennzeichnet, daß** der Profilsteg (6) ein in modularem Bezug zu den Einhängeöffnungen (15, 15') stehendes Lochbild aus langschlitzförmig ineinandergreifenden Rundlochungen (22) aufweist.

13. Tragkonstruktion nach einem der vorhergehenden Ansprüche, **dadurch gekennzeichnet, daß** die zu einem Langschlitz zusammengefaßten Rundiochungen (22) sich mit zwischen diesen angeordneten Rechtecköffnungen (23) über die Länge des Tragprofils (1) verteilt abwechseln.

14. Tragkonstruktion nach einem der vorhergehenden Ansprüche, **gekennzeichnet durch** eine Federklammer (31, 31'), welche in eine Einhängeöffnung (15, 15') einhängbar und auf die Glashalterleiste (13, 13') aufklipsbar ist und welche Mittel zum Einrasten eines Glasrahmens (32, 32') aufweist.

15. Tragkonstruktion nach einem der vorhergehenden Ansprüche, **dadurch gekennzeichnet, dass** ein in der Befestigungsnut (4) aufgenommenes Adapterstück (9) eine Klemmschraube (10) zur Abstützung auf dem Nutgrund (26) und eine zugehörige Klemmutter (33) zur Abstützung an dem Nutgrund (26) gegenüberliegenden Arretierungsstegen (28, 28') der Befestigungsnut (4) aufweist.

16. Tragkonstruktion nach Anspruch 15, **dadurch gekennzeichnet, dass** das Adapterstück (9) einen z. B. mittels Adapterklip (34) auf die Klemmutter (33) aufgesetzten elastisch nachgiebigen Federarm (35) zur Halterung in der Befestigungsnut (4) vor dem Festklemmen aufweist.

## Claims

1. Support structure for interior walls, in particular for the room-delimiting partition of utility rooms such as offices, with vertical carrier profiles (1) formed as a one-piece or two-piece rolled profile of sheet metal, onto one or both sides of which can be releasably attached, by means of assembly elements (16, 16'), wall shells (25, 25'), glazing frames or door frames separated from each other by a butt joint (3), where the carrier profile (1) on both ends of a profile web (6, 7: 20, 20') formed by a web wall (20) has retaining legs (2, 2') bent away from said web on both sides with openings (15, 15') for mounting of the assembly elements (16, 16'), where on a carrier profile (1) arranged in the area of the butt joint (3) of the wall shell (25, 25'), glazing frame or door frame, can be mounted additional fixing elements (24) for artificial floors, shelves, cabinet elements, desks or table panels, as on both sides of the carrier profile (1), between the retaining legs (2, 2'), is left clear a fixing groove (4) extending over the length of the carrier profile (1) and oriented to the butt joint (3) of the wall shell (25, 25'), glazing frame or door frame, for holding adapter pieces (9) of the fixing elements (24) for the artificial floors, shelves, cabinet elements, desks or table panels, **characterised in that** the profile web (6, 7; 20, 20') is formed by a web wall (20) with two edge strips (7) lying at the ends of the web wall (20) or two web walls (20, 20') lying next to each other, and that in the groove base (26) of the fixing groove (24) concerned at least one wall section (5, 5') covers the profile joint (8) between the web wall (20) and the edge strips (7) or the two web walls (20, 20') which form the profile web (6).

2. Support structure according to claim 1, **characterised in that** the fixing groove (4) is formed as a C-groove with one or two blocking webs (28, 28') delimiting the groove entry slot (27).

3. Support structure according to claim 1 or 2, **characterised in that** the retaining legs (2, 2') are formed as box profiles delimiting the fixing groove (4) on both sides, the outer walls (29, 29') of which profiles have the mounting openings (15, 15') for the assembly elements (16, 16').

4. Support structure according to any of the previous claims, **characterised In that** the adapter pieces (9) can be defined in the fixing grooves (4), for example by means of clamping screws (10).

5. Support structure according to any of the previous claims, **characterised in that** the side walls (30, 30') of the retaining legs (2, 2') are formed as essentially U-shaped engagement grooves (11, 11') for holding, by force and/or form fit, the fixing webs (12) of a glass holder strip (13).

6. Support structure according to any of the previous claims, **characterised in that** the fixing webs (12) and hence the glass holder strips (13) are secured by means of blocking edges (14, 14') formed in the groove run-out of the engagement grooves (11, 11').

7. Support structure according to any of the previous claims, **characterised in that** the mounting openings (15, 15') for the assembly elements (16, 16') of the wall shells or similar taper towards their two narrow sides.

8. Support structure according to any of the previous claims, **characterised in that** the mounting openings (15, 15') for the assembly elements (16, 16') of the wall shells or similar are formed as retaining grooves (17, 17') extending over the length of the supporting element (1).

9. Support structure according to any of the previous claims, **characterised in that** the retaining grooves (17, 17') are formed for example as asymmetrical C-grooves with at least one blocking web (18, 18') on the groove run-out.

10. Support structure according to any of the previous claims, **characterised in that** the assembly elements (16, 16') can be engaged releasably in the retaining grooves (17, 17') by means of sprung sections (19, 19').

11. Support structure according to any of the previous claims, **characterised in that** the web wall (20) with the edge strips (7) or the further web wall (20') are permanently connected by plunge fit with lock forms (21) preferably on both sides.

12. Support structure according to any of the previous claims, **characterised in that** the profile web (6) has a hole pattern which is in modular relation to the mounting openings (15, 15') and comprises round holes (22) intermeshing as slots.

13. Support structure according to any of the previous claims, **characterised in that** the round holes (22) combined into a slot alternate with rectangular openings (23) distributed between these and arranged over the length of the supporting profile (1).

14. Support structure according to any of the previous claims, **characterised by** a spring clamp (31, 31') which can be suspended in a mounting opening (15, 15') and clipped onto the glass holder strip (13, 13') and which has means for engagement of a glass frame (32, 32').

15. Support structure according to any of the previous claims, **characterised in that** an adapter piece (9) held in the fixing groove (4) has a clamping screw (10) for support on the groove base (26) and an associated clamping nut (33) for support on the blocking webs (28, 28') of the fixing groove (4) opposite the groove base (26).

16. Support structure according to claim 15, **characterised in that** the adapter piece (9) has an elastically flexible spring arm (35) placed on the clamping nut (33) by means e.g. of an adapter clip (34) for holding in the fixing groove (4) before clamping firmly.

## Revendications

1. Structure porteuse pour cloisons, notamment pour cloisons servant à subdiviser des pièces utilitaires telles que des bureaux, comportant des profilés porteurs (1) verticaux en tôle d'acier formés d'un profilé laminé en une ou deux parties, sur lesquels des panneaux (25, 25'), des cadre de vitrage ou des chambranles de porte séparés par un joint vif (3) peuvent être fixés, d'un côté ou des deux, par le biais d'éléments de montage (16, 16') et en restant démontables, le profilé porteur (1) présentant pour cela à chacune des deux extrémités de son âme (6, 7; 20, 20') formée d'une paroi (20), des rebords de maintien (2, 2') partant de chaque côté desdites extrémités et munis d'ouvertures (15, 15') destinées à l'accrochage des éléments de montage (16, 16'), des éléments de fixation (24) pour tablettes, étagères, meubles, tableaux ou dessus de table pouvant être prévus sur l'un des profilés porteurs (1) placés près du joint vif (3) séparant les panneaux (25, 25'), cadre de vitrage ou chambranles de porte, le profilé porteur (1) présentant sur chacun de ses deux côtés, entre les rebords de maintien (2, 2'), une rainure de fixation (4) s'étendant sur toute la longueur du profilé porteur (1) au droit du joint vif (3) entre les panneaux (25, 25'), cadres de vitrage ou chambranles de porte, destinée à recevoir les adaptateurs (9) des éléments de fixation (24) pour tablettes, étagères, éléments d'armoire, tableaux ou dessus de table, **caractérisée en ce que** l'âme du profilé (6, 7 ; 20, 20') est formée d'une paroi (20) avec deux rabats (7) courant le long de ladite paroi (20) à ses deux extrémités et que dans le fond (26) de chaque rainure de fixation (4) se trouve au moins une section de paroi (5, 5') qui recouvre la jonction (8) entre la paroi (20) et les rabats (7) ou entre les deux parois (20, 20') qui forment l'âme du profilé (6).

2. Structure porteuse selon la revendication 1, **caractérisée en ce que** la rainure de fixation (4) est une rainure en C présentant un ou deux rebords de butée (28, 28') au bord de la fente (27) constituant l'ouverture de la rainure.

3. Structure porteuse selon les revendications 1 ou 2, **caractérisée en ce que** les rebords de maintien (2, 2') ont la forme de profilés creux de section rectangulaire délimitant la rainure de fixation (4) des deux côtés et dont les parois externes (29, 29') présentent les ouvertures (15, 15') destinées à l'accrochage des éléments de montage (16, 16').

4. Structure porteuse selon l'une des revendications précédentes, **caractérisée en ce que** les adaptateurs (9) peuvent être serrés dans les rainures de fixation (4) par exemple au moyen de vis de serrage (10).

5. Structure porteuse selon l'une des revendications précédentes, **caractérisée en ce que** les parois latérales (30, 30') des rebords de maintien (2, 2') forment des rainures de blocage (11, 11') essentiellement en forme de U dans lesquelles se fixeront par engagement positif et / ou par force les talons de fixation (12) d'un profilé de fixation de vitrage (13).

6. Structure porteuse selon l'une des revendications précédentes, **caractérisée en ce que** les talons de fixation (12) et par conséquent les profilés de fixation de vitrage (13) sont bloqués par le biais des rebords de butée (14, 14') situés à l'ouverture des rainures de blocage (11, 11').

7. Structure porteuse selon l'une des revendications précédentes, **caractérisée en ce que** les ouvertures (15, 15') destinées à l'accrochage des éléments de montage (16, 16') des panneaux ou d'objets similaires se rétrécissent vers leurs deux extrémités.

8. Structure porteuse selon Tune des revendications précédentes, **caractérisée en ce que** les ouvertures (15, 15') destinées à l'accrochage des éléments de montage (16, 16') de panneaux ou d'objets similaires constituent des rainures de maintien (17, 17') s'étendant sur la longueur du profilé porteur (1).

9. Structure porteuse selon l'une des revendications précédentes, **caractérisée en ce que** les rainures de maintien (17, 17') revêtent par exemple la forme de rainures en C asymétriques comportant au moins une arête de butée (18, 18') au bord de la rainure.

10. Structure porteuse selon l'une des revendications précédentes, **caractérisée en ce que** les éléments de montage (16, 16') peuvent être encliquetés de façon réversible dans les rainures de maintien (17, 17') au moyen de languettes (19, 19').

11. Structure porteuse selon l'une des revendications précédentes, **caractérisée en ce que** la paroi (20) formant l'âme du profilé porteur est rendue solidaire des rabats (7) ou de l'autre paroi (20') de manière irréversible par perçage et agrafage (21), de préférence des deux côtés.

12. Structure porteuse selon l'une des revendications précédentes, **caractérisée en ce que** l'âme du profilé (6) présente des fentes longitudinales formées de plusieurs trous ronds (22) se chevauchant, disposées de manière modulaire par rapport aux ouvertures d'accrochage (15, 15').

13. Structure porteuse selon l'une des revendications précédentes, **caractérisée en ce que** les trous ronds (22) se chevauchant pour former une fente longitudinale sont disposés le long du profilé porteur (1) en alternance avec des ouvertures rectangulaires (23).

14. Structure porteuse selon l'une des revendications précédentes, **caractérisée par** a un clip (31, 31') pouvant être accroché dans une ouverture d'accrochage (15, 15') et encliqueté sur le profilé de fixation de vitrage (13, 13') et qui comporte des dispositifs permettant d'encliqueter un cadre de vitrage (32, 32').

15. Structure porteuse selon l'une des revendications précédentes, **caractérisée en ce qu'**un adaptateur (9) inséré dans la rainure de fixation (4) présente une vis de serrage (10) permettant la venue en butée sur le fond de la rainure (26) ainsi qu'un écrou de serrage (33) correspondant venant en butée contre les rebords de butée (28, 28') situés à l'opposé du fond (26) de la rainure de fixation (4).

16. Structure porteuse selon l'une des revendications précédentes, **caractérisée en ce que** l'adaptateur (9) comporte un bras élastique (35) fixé sur l'écrou de serrage (33), par exemple au moyen d'un clip d'adaptateur (34) destiné au maintien à l'intérieur de la rainure de fixation (4) avant le serrage.
